# EUROPÄISCHE PATENTSCHRIFT

(11) **EP 0 738 382 B1**
(45) Veröffentlichungstag und Bekanntmachung des Hinweises auf die Patenterteilung: **28.04.1999**
(21) Anmeldenummer: 95905588.0
(22) Anmeldetag: 24.12.1994
(51) Int. Cl.: G01B 11/30

(54) **VERFAHREN ZUR MESSUNG DER RAUHIGKEIT EINER MATERIALOBERFLÄCHE**
PROCESS FOR MEASURING THE ROUGHNESS OF A MATERIAL SURFACE
PROCEDE DE MESURE DE LA RUGOSITE DE LA SURFACE D'UN MATERIAU

(30) Priorität: 07.01.1994 EP 94100144
(43) Veröffentlichungstag der Anmeldung: 23.10.1996
(73) Patentinhaber: HONEYWELL AG, 63067 Offenbach (DE)
(72) Erfinder: HAGEN, Werner, D-56567 Neuwied (DE); SCHAUST, Karlheinz, D-56133 Fachbach (DE)
(74) Vertreter: Herzbach, Dieter, Dipl.-Ing.
(86) Internationale Anmeldenummer: EP9404305
(87) Internationale Veröffentlichungsnummer: WO9518952

(56) Entgegenhaltungen:
- WO-A-93/02337
- DE-A- 3 703 504

## Beschreibung

Die vorliegende Erfindung bezieht sich auf ein Verfahren zur Messung der Rauhigkeit einer Materialoberfläche nach dem Gattungsbegriff des Patentanspruches 1.

Ein derartiges Verfahren ist aus der CH-PS 552 197 bekannt. Dort wird unter anderem vorgeschlagen, eine Reihe von Detektoren entlang der Hauptachse der Streulichtellipse anzuordnen, die entsteht, wenn die Materialoberfläche eine gewisse Rauhigkeit aufweist und mit einem parallelen Lichtstrahlbündel unter einem vorgegebenen Winkel beleuchtet wird. Vorzugsweise wird dort in der Nähe des Glanzwinkels die Halbwertsbreite des Streulichtkegels gemessen und als Maß für die Rauhigkeit der untersuchten Oberfläche benutzt. Anstatt der Auswertung mit einer Detektorzeile ist dort ferner die Auswertung mit einer Fernsehkamera beschrieben.

Die Bewertung der Rauhigkeit ist von erheblicher Bedeutung bei der Herstellung von Papier, da die Rauhigkeit oder umgekehrt die Glätte eine Aussage über die Bedruckbarkeit des Papiers ergibt.

Bei der bekannten Anordnung muß dafür Sorge getragen werden, daß am Ort der Beleuchtung der Materialbahn durch das Lichtstrahlenbündel diese so geführt ist, daß sich durch die Bewegung keine allzugroßen örtlichen Änderungen der Ebene, in der die Materialbahn verläuft, ergeben, um zu vermeiden, daß die Streulichtellipse aus dem Abtastfeld des Detektors herausläuft. Das gleiche Problem ergibt sich, wenn die zu messende Oberfläche zu rauh ist, so daß die Streulichtverteilung in der Hauptachse der Streulichtellipse das durch den Zeilendetektor bzw. die Fernsehkamera vorgegebene Abtastfeld überschreitet.

Es ist daher die Aufgabe der vorliegenden Erfindung, das durch die bekannte Vorrichtung ausgeübte Verfahren so auszugestalten, daß auch noch die Rauhigkeit von sehr rauhen Oberflächen erfaßt werden kann. Die Lösung dieser Aufgabe gelingt gemäß den Merkmalen des Patentanspruches 1. Weitere vorteilhafte Ausgestaltungen des erfindungsgemäßen Verfahrens ergeben sich aus den abhängigen Ansprüchen.

Anhand von in den beiliegenden Zeichnungen dargestellten Ausführungsbeispielen sei im folgenden die Erfindung näher erläutert. Es zeigen:
- Fig. 1: die prinzipielle Meßanordnung; und
- Fig. 2: eine schematische Skizze zur Erläuterung des erfindungsgemäßen Verfahrens.

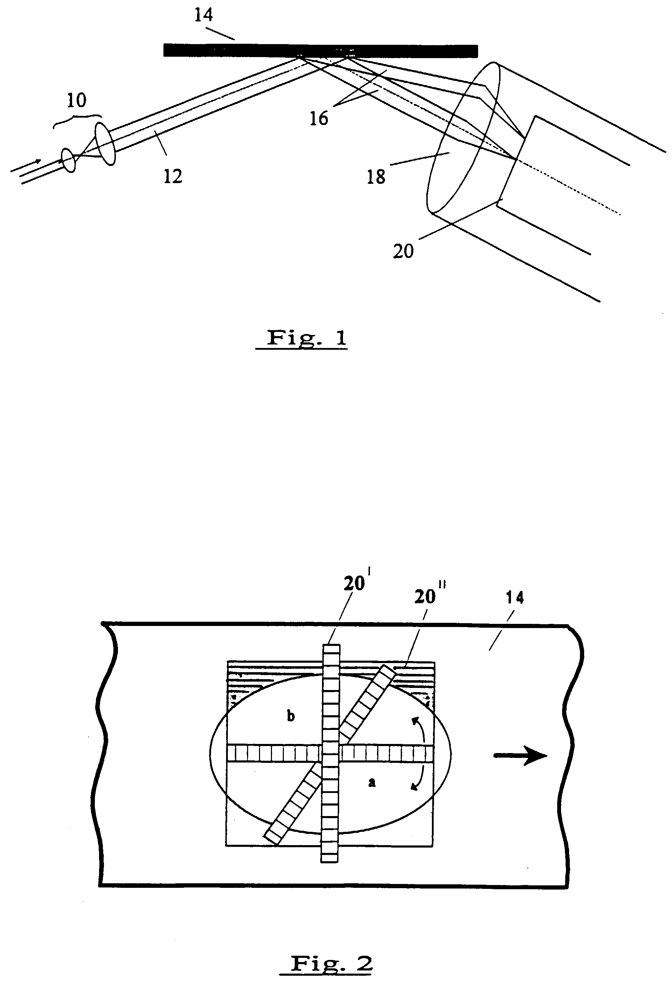

Gemäß Fig. 1 wird mit einem in einem Teleskop 10 aufgeweiteten kollimierten Lichtstrahlenbündel 12 die zu untersuchende Oberfläche 14 beleuchtet. Die von der rauhen Oberfläche 14 reflektierten Strahlen 16 werden über eine Optik 18 auf einen Empfänger 20 geworfen, der aus einer zeilenförmigen oder flächenhaften Detektoranordnung bestehen kann und insbesondere durch eine Zeilen- oder Flächenkamera (Vidikon oder CCD) vorgegeben ist.

Gemäß Fig. 2 ist erkennbar, daß eine Zeilenkamera 20', wenn sie in der durch den Pfeil angedeuteten Bewegungsrichtung der Oberfläche 14 ausgerichtet ist, die Hauptachse a der Streulichtellipse nicht mehr vollständig erfaßt, wenn das Material eine große Rauhigkeit aufweist und dementsprechend die Steuellipse aufgeweitet wird. Durch Drehung der Zeilenkamera 20' gegenüber der Hauptachse a um einen vorgegebenen Winkel kann man erreichen, daß diese die Streulichtellipse wieder erfaßt. Vorzugsweise erfolgt eine Drehung der Zeilenkamera 20' derart, daß sie mit der Nebenachse b der Streulichtellipse zusammenfällt. Die Ermittlung der Halbwertsbreite als ein Maß für die Rauhigkeit der Oberfläche kann dann bezüglich der Nebenachse b der Streulichtellipse durchgeführt werden.

Ferner ist aus Fig. 2 erkennbar, daß bei Verwendung einer Flächenkamera 20" diese die Streulichtellipse bezüglich der Nebenachse b noch auswerten kann, wenn man die Sensorelemente der Flächenkamera für eine Zeilenabtastung parallel zur Bewegungsrichtung der Oberfläche 14 zusammenfaßt, wie dies durch einige eingezeichnete Abtastzeilen angedeutet ist.

## Patentansprüche

1. Verfahren zur Messung der Rauhigkeit einer Materialoberfläche, insbesondere einer Papierbahn, wobei die Materialoberfläche mit einem parallelen Lichtstrahlenbündel beleuchtet wird und die Streuellipse des zurückgestrahlten Lichtes ausgewertet wird, **gekennzeichnet durch** die Auswertung der Streuellipse in einer von der Hauptachse der Streuellipse abweichenden Richtung bei optisch rauhen Flächen.

2. Verfahren nach Anspruch 1 mit einer Zeilenkamera für die Auswertung, **dadurch gekennzeichnet,** daß die Zeilenkamera gegenüber der Hauptachse der Streuellipse verdreht ist.

3. Verfahren nach Anspruch 1 mit einer Flächenkamera, **dadurch gekennzeichnet**, daß die Abtastung der Streuellipse mittels der Flächenkamera in einer von der Hauptachse abweichenden Richtung erfolgt.

4. Verfahren nach Anspruch 3, **dadurch gekennzeichnet**, daß die Zeilenabtastung parallel zur Hauptachse der Streuellipse erfolgt.

5. Verfahren nach einem der Ansprüche 1 bis 4, **dadurch gekennzeichnet**, daß die Auswertung der Streuellipse in der Nebenachse erfolgt.

## Claims

1. Process for measuring the roughness of a material surface, in particular of a paper web, whereat the material surface is illuminated by a parallel bundle of light rays and the scattering ellipse of the reflected light is evaluated, **characterized by** the evaluation of the scattering ellipse in a direction deviating from the main axis of the scattering ellipse at optical rough surfaces.

2. Process according to claim 1 With a line camera for the evaluation, **charaterized in that**, the line camera is rotated with respect to the main axis of the scattering ellipse.

3. Process according to claim 1 with an areal camera, **characterized in that**, scanning of the scattering ellipse by means of the areal camera is done in a direction deviating from the main axis.

4. Process according to claim 3, **characterized in that**, line scanning is done parallel to the main axis of the scattering ellipse.

5. Process according to one of claims 1 to 4. **characterized in that**, the evaluation of the scattering ellipse is done in the minor axis.

## Revendications

1. Procédé de mesure de la rugosité de la surface d'un matériau, notamment d'une bande de papier, la surface du matériau étant alors éclairée à l'aide d'un faisceau de rayonnement lumineux parallèle et l'ellipse diffusée de la lumière réfléchie étant évaluée, caractérisé par l'évaluation de l'ellipse diffusée suivant une direction différant du grand axe de l'ellipse diffusée, dans le cas de surfaces optiquement rugueuses.

2. Procédé selon la revendication 1 mis en oeuvre à l'aide d'une caméra à analyse de ligne pour l'évaluation, caractérisé en ce que l'on fait pivoter la caméra à analyse de ligne par rapport au grand axe de l'ellipse diffusée.

3. Procédé selon la revendication 1 mis en oeuvre à l'aide d'une caméra à analyse de surface, caractérisé en ce que le balayage de l'ellipse diffusée au moyen de la caméra à analyse de surface se fait suivant une direction différant du grand axe.

4. Procédé selon la revendication 3, caractérisé en ce que le balayage par lignes se fait parallèlement au grand axe de l'ellipse diffusée.

5. Procédé selon l'une des revendications 1 à 4, caractérisé en ce que l'évaluation de l'ellipse diffusée se fait suivant le petit axe.
